# EUROPEAN PATENT SPECIFICATION

(11) **EP 2 375 194 B1**
(45) Date of publication and mention of the grant of the patent: **19.08.2015**
(21) Application number: 11160927.7
(22) Date of filing: 02.04.2011
(51) Int. Cl.: F25B 45/00, G01G 17/04, G01G 23/00

(54) **Station for charging/recovering a refrigerant fluid into/from the vehicle air-conditioning system**
Station zum Laden/Rückgewinnen eines Kühlmittels in ein/aus einem Fahrzeugklimaanlagesystem
Station de chargement/récupération d'un fluide réfrigérant vers/du système de climatisation d'un véhicule

(30) Priority: 02.04.2010 IT TV20100056
(43) Date of publication of application: 12.10.2011
(73) Proprietor: Texa S.p.A., Monastier di Treviso (IT)
(72) Inventor: Vianello, Bruno, 31056 Roncade (IT)
(74) Representative: Bergadano, Mirko

(56) References cited:
- WO-A1-2008/071270
- DE-A1- 3 545 160
- US-A- 5 046 322

## Description

The present invention relates to a station for charging/recovering a refrigerant fluid into/from the air-conditioning system of a vehicle, such as, for example, a motor vehicle, to which the following description refers purely by way of example, without this implying any loss of generality.

In particular, the present invention relates to a refrigerant-charging/recovery station of the type comprising: at least one tank containing a refrigerant; a refrigerant intake/supplying unit, which is connected on one side to the tank and on the other side to the cooling circuit of the motor vehicle air-conditioning system, and is configured to, upon command, intakes/injects from/into the cooling circuit a given amount of refrigerant; and an electronic control unit configured to control the recovery/injection operations by mean of the refrigerant intake/supplying unit.

The station described above further comprises a system for measuring the weight of the refrigerant contained in the tank, whilst the electronic control unit is configured to receive instant by instant, during the charging step, the weight measured so as to control, on the basis thereof, the exact amount of refrigerant injected into the cooling circuit of the air-conditioning system.

In particular, the measurement system comprises an electronic weighing scale, which is set on a supporting surface of the frame of the charging/recovery station, and is provided with a horizontal measurement surface set on top of which is the refrigerant tank.

The electronic weighing scale is configured to guarantee given margins of error in the measurement of the weight of the fluid contained in the tank only when certain measuring conditions are respected, one of which is the perfect horizontality of the corresponding measuring surface.

Consequently, whenever the charging station of the type described above is set resting on a non-horizontal surface, there is a consequent inclination of the tank and of the measuring surface of the weighing scale, which determines a consequent error in the weight measured by the weighing scale and consequently causes introduction of an error in the overall amount of refrigerant injected into the air-conditioning system.

The evolution from the technological and normative standpoint of air-conditioning systems of motor vehicles has led in the last few years to a considerable reduction in the total amount of refrigerant to be injected into the air-conditioning system. Consequently, the margin of error allowed for the amount of the refrigerant injected in the course of charging is extremely narrow.

In the light of the above, in the charging/recovery stations field, there has arisen a marked need to be able to calculate the weight of the refrigerant supplied into the system with a high degree of precision and/or prevent any charging operation when the inclination of the charging/recovery station is such as not to enable the measurement of the weight to be made with the guarantee of an acceptable level of precision in charging.

DE3545160 discloses an assembly for the transfer of milk, in which the milk is advanced to a metering vessel supported within a frame for the purpose of gravimetric mass determination and demarcation and weighed therein by means of a weighing cell which is connected to the metering vessel. An inclination angle of the support axis measured in view of the vertical which is detected by means of a measuring device is transferred to the evaluation means and used there for the calculation of the weight.

US5046322 discloses an electronic scale assembly for transferring refrigerant charge between a tank and refrigeration equipment under service, wherein the scale includes a platform mounted within the enclosure at a position to support a refrigerant tank when the cover is open, and a strain gage sensor for providing an electrical signal as function of weight supported by the platform.

WO2008/071270 discloses an electronic scales comprising a transducer, a digital signal processing unit, and an inclinometer deriving a signal for the tilt of the scales from the difference of at least two signals, a signal processing unit add up the two signals and correct the signal of the transducer which signal is distorted by vibrations, using the cumulative signal.

The aim of the present invention is consequently to provide a refrigerant-charging/recovery station that will be able to meet the requirements set forth above.

According to the present invention, a station for charging/recovering a refrigerant into/from the air-conditioning system of a vehicle is provided as specified in Claim 1 and preferably, but not necessarily, in any one of the claims that depend either directly or indirectly upon Claim 1.

According to the present invention an operating method of a refrigerant-charging/recovery station is moreover provided as specified in Claim 8 and preferably, but not necessarily, in any one of the claims that depend either directly or indirectly upon Claim 8.

According to the present invention, use of an electronic inclinometer in a refrigerant-charging/recovery station is moreover provided as specified in Claim 15.

The present invention will now be described with reference to the annexed drawings, which illustrate a non-limiting example of embodiment thereof and in which:
- Figure 1 is a schematic front elevation, with parts removed for reasons of clarity, of a refrigerant-charging/recovery station in accordance with the present invention;
- Figures 2, 3, and 4 are schematic views of the system for measuring the weight provided in the station shown in Figure 1 in as many operative conditions; and
- Figure 5 is a flowchart of the operations implemented by the operating method of the station shown in Figure 1.

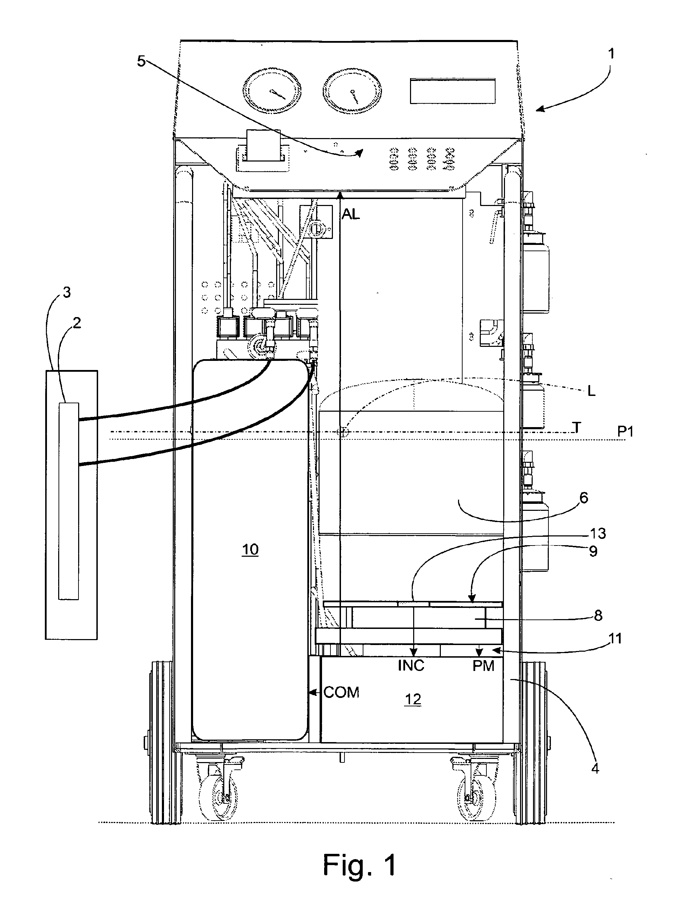

With reference to Figure 1, number 1 designates as a whole a station for charging/recovering a refrigerant into/from the air-conditioning system 2 of a vehicle 3, such as for example an automobile, a lorry, a bus or coach, or any other similar land motor vehicle.

In the example shown in Figure 1, the charging/recovery station 1 comprises: a frame 4, preferably equipped with wheels for resting on the ground to enable displacement of the station 1; a user control interface 5, designed to enable a user to input commands to the station 1; at least one tank 6 for containing the refrigerant; and a weighing system 7 for weighing the refrigerant contained in the tank 6.

In particular, the weighing system 7 comprises at least one electronic load cell or weighing scale 8, which is supported by the frame 4 and is provided with a measuring surface 9 set resting on which is the tank 6.

In detail, the electronic weighing scale 8 outputs the measured weight PM and is stably supported by the frame 4 in such a way that, when the longitudinal axis L and the transverse axis T of the frame 4 itself lie in a horizontal plane, the measuring surface 9 of the electronic weighing scale 8 also lies in a horizontal plane.

The charging/recovery station 1 further comprises an refrigerant intake/supplying unit 10, which is connected on one side to the tank 6 and on the other, through a pair of ducts, to the cooling circuit of the air-conditioning system 2. The refrigerant intake/supplying unit 10 is configured to supply, upon command, into the cooling circuit of the air-conditioning system 2 a given amount of refrigerant fluid, that it draws from the tank 6.

The charging/recovery station 1 further comprises an electronic control system 11, which is configured to control the intake/injection unit 10 during the operations of charging/recovery of the refrigerant into/from the air-conditioning system 2.

In particular, with reference to Figures 1-4, the electronic control system 11 is configured to measure the inclination INC of the charging/recovery station 1 with respect to a pre-set horizontal reference plane P1 and inhibits the operation of injection of the refrigerant by the intake/injection unit 10 when the inclination INC measured satisfies a pre-set relation with a pre-set inclination threshold.

It should be pointed out that the pre-set horizontal reference plane P1 is defined as a plane orthogonal to the gravity vector g, whereas the inclination INC can correspond to the transverse component α₁ and longitudinal component α₂ (not represented) of the angle between the measuring surface 9 of the electronic weighing scale and the pre-set horizontal reference plane P1.

From what has been described above, it is evident that the inclination INC measured on the measuring surface 9 corresponds to the inclination of the charging/recovery station 1.

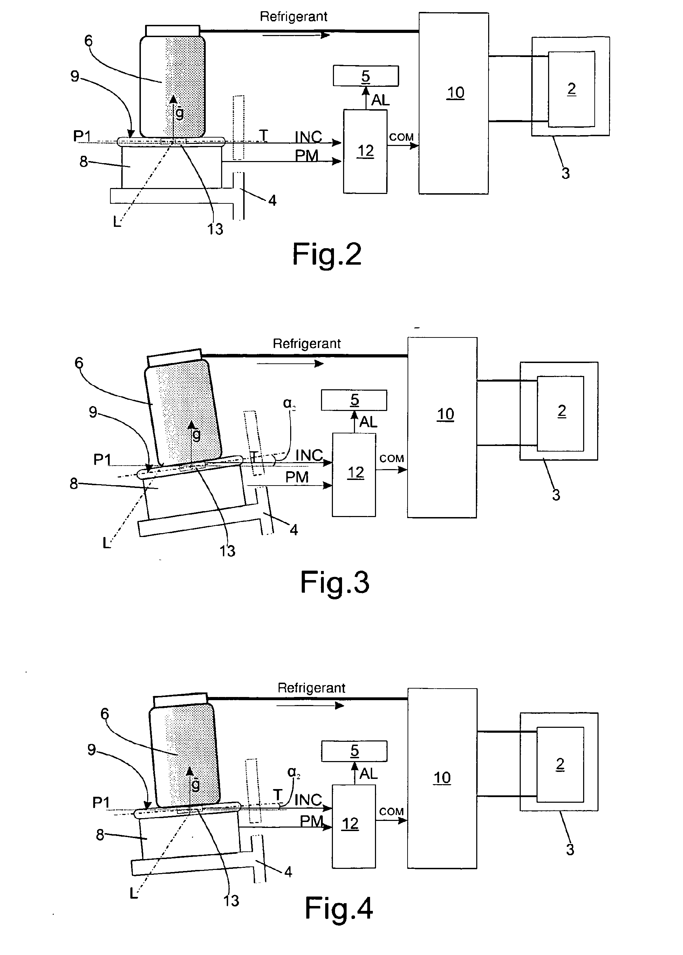

In the example illustrated in Figure 2, the electronic control system 11 comprises a control unit 12 configured to control operation of the intake/injection unit 10 through a command signal COM, and a device for measuring the inclination 13 of the charging/recovery station.

The device for measuring the inclination 13 is preferably, but not necessarily, stably fixed to the measuring surface 9, and comprises an electronic inclinometer configured to measure the inclination INC of the measuring surface 9 of the charging/recovery station 1.

In the example illustrated in Figures 1-4, the electronic inclinometer is configured to measure the transverse component α ₁ and/or longitudinal component α₂ (not represented) of the angle between the measuring surface 9 of the electronic weighing scale 8 and the pre-set horizontal reference plane P1.

In particular, the electronic inclinometer can comprise an accelerometer such as, for example, a uniaxial, or biaxial or triaxial accelerometer.

The electronic control unit 12 is configured to: receive at input the inclination INC (α₁,α₂) measured; compare the inclination INC (α₁,α₂) measured with a pre-set limit inclination threshold; determine a condition of acceptability of the weighing when the inclination measured is below or equal to the pre-set minimum inclination threshold; or otherwise determine a condition of unacceptability of the weighing when the inclination measured is above the pre-set minimum inclination threshold.

The electronic control unit 12 is moreover configured to stop the intake/supplying unit 10 from carrying out the charging operation when it determines the condition of unacceptability of the weighing, or otherwise is configured to make a correction on the measured weight PM as a function of the measured inclination when it determines the condition of acceptability of the weighing.

The electronic control unit 12 can be moreover conveniently configured to generate an alarm signal AL so as to signal/communicate to the operator, through the control interface 5, a visual or acoustic message indicating the condition of inhibition of the charging operation when it determines the condition of unacceptability of the weighing caused by an excessive inclination of the charging/recovery station 1.

The electronic control unit 12 is moreover configured to receive at input the measured weight PM supplied by the weighing system 7, and in the condition of acceptability of the weighing, makes a correction on the measured weight PM as a function of the inclination INC (α₁,α₂) so as to determine a corrected weight PC of the refrigerant to be injected into the air-conditioning system 2.

In particular, the correction on the weight PM on the part of the electronic control unit 12 can be made through a correction function PC=F (PM, INC (α₁,α₂)) or through tables stored in an internal memory of the electronic control unit 12 and containing, for each value of inclination, a weight-correction factor ΔP=K (PM, INC (α₁,α₂)).

The electronic control unit 12 is moreover configured to control the intake/injection unit 10 in such a way that the amount of refrigerant injected into the air-conditioning system corresponds to the corrected weight PC.

Figures 2, 3, and 4 are schematic illustrations of three examples of operation of the charging station 1.

With reference to Figure 2, if the measured inclination INC is zero, the electronic control unit 12 detects the absence of errors in the measured weight PM and then controls the intake/injection unit 10 in such a way that the amount of refrigerant injected into the air-conditioning system 2 corresponds to the weight measured PM.

With reference to Figure 3, if the measured inclination is above the pre-set minimum inclination threshold, the electronic control unit 12 determines the condition of unacceptability of the weighing, inhibits charging, and generates the alarm signal AL.

With reference to Figure 4, if the inclination measured is below or equal to the pre-set minimum inclination threshold, then the electronic control unit 12 determines the condition of acceptability of the weighing, corrects the measured weight PM on the basis of the inclination, and controls charging in such a way that the weight of the refrigerant injected corresponds to the corrected weight PC.

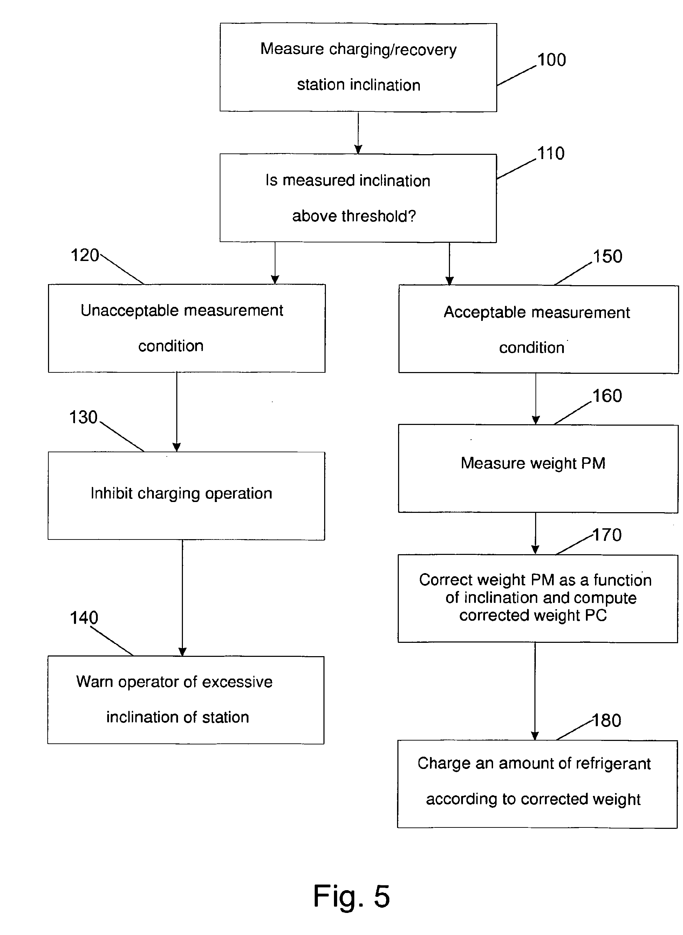

With reference to Figure 5, the operating method of the charging/recovery station 1 comprises of: measuring, through the device for measuring the inclination 13, the longitudinal inclination and/or transverse inclination of the charging/recovery station 1 with respect to the pre-set horizontal reference plane P1 (block 100); comparing the inclination measured with the pre-set minimum inclination threshold (block 110); and determining a condition of unacceptability of the weighing when the inclination measured is above the pre-set minimum inclination threshold (block 120), or otherwise, determining a condition of acceptability of the weighing when the inclination measured is below or equal to the pre-set minimum inclination threshold (block 150).

In the case where the condition of unacceptability of the weighing is detected, the operating method inhibits the charging operation (block 130) and preferably signals/communicates to the operator a visual or acoustic message, through the control interface 5, indicating the condition of inhibition of the charging operation, caused by an excessive inclination of the charging/recovery station 1 (block 140).

Otherwise, in the case where the condition of acceptability of the weighing is detected, the method comprises the steps of: receiving at input the measured weight PM supplied by the weighing system 7 (block 160); making a correction on the measured weight PM as a function of the inclination so as to determine a corrected weight PC of the refrigerant to be injected into the air-conditioning system of a vehicle (block 170); and controlling the intake/injection unit 10 in such a way that the amount of refrigerant injected into the air-conditioning system 2 corresponds to the corrected weight PC (block 180).

The advantages of the charging/recovery station described above are evident: in the first place, the charging/recovery station is able to inhibit any charging operation when its own inclination is such as to alter completely the measurement of the weight of the refrigerant, thus eliminating the possibility of carrying out a charging of the fluid into the air-conditioning system that is completely incorrect and potentially harmful.

In addition, the charging/recovery station is able to correct in a completely automatic way the weight measured, consequently compensating for the measurement error introduced by the inclination of the station and thus obtaining a measurement of the weight, and, consequently, a charging, that is extremely precise.

Finally, it is clear that modifications and variations may be made to the station and to the method described and illustrated above, without thereby departing from the scope of the present invention as defined by the annexed claims.

## Claims

1. A refrigerant charging/recovery station (1) connectable to an air conditioning system (2) of a vehicle (3) so as to charge/recover a refrigerant fluid into/from said air-conditioning system (2) of the vehicle (3);
said refrigerant-charging/recovery station (1) comprising:
- at least a refrigerant tank (6) containing the refrigerant fluid;
- a refrigerant suction/supplying unit (10), which is connected to said tank (6) and is connectable to the air conditioning system (2) of said vehicle (3) in such a way as to intake/supply, upon command, the refrigerant fluid from/into the air-conditioning system (2) of the vehicle (3); said refrigerant charging/recovery station (1) being **characterized in that** it comprises electronic means (11), which are configured to:
- measure the inclination (INC(α₁,α₂)) of said refrigerant-charging/recovery station (1) with respect to a pre-set horizontal reference plane (P1);
- compare the inclination (INC(α₁,α₂)) measured with a pre-set minimum inclination threshold;
- stop or enable said refrigerant suction/supplying unit (10) to inject the refrigerant into said air-conditioning system (2) of said vehicle (3) on the basis of the outcome of said comparison.

2. The refrigerant charging/recovery station according to Claim 1, wherein said electronic means (11) comprise at least one electronic inclinometer (13) configured to measure the longitudinal inclination (α₁) and/or transverse inclination (α₂) of said charging/recovery station (1) with respect to said pre-set horizontal reference plane (P1).

3. The refrigerant charging/recovery station according to Claim 1 or Claim 2, wherein said electronic means (11) comprise at least an accelerometer (13) configured to measure the longitudinal inclination (α₁) and/or transverse inclination (α₂) of the charging/recovery station (1) with respect to said pre-set horizontal reference plane (P1).

4. The refrigerant-charging/recovery station according to any one of the preceding claims, comprising:
- at least one electronic weighing scale (8) comprising a measuring surface (9) set resting on which is said tank (6); said electronic weighing scale (8) supplying the measured weight (PM) associated to the weight of the refrigerant contained in said tank (6);
said electronic means (11) comprising control means (12), which receive at input the measured weight (PM) from the electronic weighing scale (8) and the measured inclination (INC(α₁,α₂)) and are configured to correct the measured weight (PM) on the basis of the measured inclination (INC(α₁, α₂)) so as to determine a corrected weight (PC) of the refrigerant to be charged into said air-conditioning system (2).

5. The station according to Claim 4, wherein said control means (12) are configured to control said refrigerant suction/supplying unit (10) during said charging operation in such a way as to inject into said air-conditioning system (2) an amount of refrigerant fluid having a weight corresponding to said corrected weight (PC).

6. The station according to Claim 4 or Claim 5, wherein said electronic means (11) are configured to determine a condition of acceptability of the measurement of the weight of the refrigerant when the inclination (INC(α₁,α₂)) measured is below or equal to said pre-set minimum inclination threshold, or else a condition of unacceptability of the measurement of the weight of the refrigerant, which inhibits the charging operation when the inclination measured is above said pre-set minimum inclination threshold.

7. The station according to Claim 6, wherein said electronic means (11) are configured to generate an alarm signal (AL) so as to signal/communicate to the operator, through a control interface (5), a visual or acoustic message indicating the condition of inhibition of the charging operation when said condition of unacceptability of the weighing is satisfied.

8. An operating method of a refrigerant charging/recovery station (1) connectable to an air-conditioning system (2) of a vehicle (3) for charging/recovering a refrigerant fluid into/from said air-conditioning system (2);
said refrigerant charging/recovery station (1) comprising at least one tank (6) containing said refrigerant, and a refrigerant suction/supplying unit (10) which is connected to said at least one tank (6) and is connectable to said air-conditioning system (2) so as to intake/supply a refrigerant from/into said air-conditioning system (2);
said method comprising the steps of:
- measuring, through electronic means (11), the inclination (INC(α₁,α₂)) of said charging/recovery station (1) with respect to a pre-set horizontal reference plane (P1);
- comparing the inclination (INC(α₁,α₂)) measured with a pre-set minimum inclination threshold; and
- inhibiting or enabling the refrigerant suction/supplying unit (10) to inject the refrigerant into said air-conditioning system (2) of said vehicle (3) on the basis of the outcome of said comparison.

9. The method according to Claim 8, comprising the step of measuring the longitudinal inclination (α₁) and/or transverse inclination (α₂) of said refrigerant-charging/recovery station (1) by means of an electronic inclinometer (13).

10. The method according to Claim 9, comprising the step of measuring the longitudinal inclination (α₁) and/or transverse inclination (α₂) of said refrigerant-charging/recovery station (1) by means of at least one accelerometer (13).

11. The method according to any one of Claims 8 to 10, wherein the refrigerant-charging/recovery station (1) comprises at least one electronic weighing scale (8), which is provided with a measuring surface (9) set resting on which is said tank (6) and which is configured to supply the measured weight (PM) associated to the weight of the refrigerant contained in said tank (6);
said method comprising the step of correcting the measured weight (PM) of the refrigerant contained in said tank (6) on the basis of said inclination measured (INC(α₁,α₂)) so as to determine a corrected weight (PC) of the refrigerant to be supplied into said air-conditioning system (2).

12. The method according to Claim 11, comprising the step of controlling said refrigerant suction/supplying unit (10) during a charging operation, in such a way as to inject into said air-conditioning system (2) an amount of refrigerant having a weight corresponding to said corrected weight (PC).

13. The method according to Claim 11 or Claim 12, comprising the step of determining: a condition of acceptability of the measured weight of the refrigerant when the inclination (INC(α₁,α₂)) measured is below or equal to said pre-set minimum inclination threshold; or else a condition of unacceptability of the measurement of the weight of the refrigerant when the inclination (INC(α₁,α₂)) measured is above said pre-set minimum inclination threshold.

14. The method according to Claim 13, comprising the step of generating an alarm signal (AL) so as to signal/communicate to the operator, through a control interface (5), a visual or acoustic message indicating the condition of inhibition of the charging operation when said condition of unacceptability of the weighing is determined.

15. Use of an electronic inclinometer (13) in a refrigerant-charging/recovery station (1) according to any one of claims 1 to 7 configured to be connected to an air-conditioning system (2) of a vehicle (3), to stop the refrigerant-charging/recovery station (1) from carrying out the operation of supplying of the refrigerant (10) into said air-conditioning system (2) of the vehicle (3) on the basis of a comparison between the inclination measured by the electronic inclinometer (13) and a pre-set minimum inclination threshold.

## Patentansprüche

1. Station (1) zum Füllen bzw. Laden/Rückgewinnen eines Kühlmittels, die mit einem Klimaanlagensystem (2) eines Fahrzeugs (3) verbindbar ist, um ein Kühlmittelfluid in das/aus dem Klimaanlagensystem (2) zu laden/rückzugewinnen;
wobei die Station (1) zum Laden/Rückgewinnen eines Kühlmittels umfasst:
- wenigstens einen Kühlmittelbehälter (6), der das Kühlmittelfluid enthält;
- eine Kühlmittelansaug-/Zuführungseinheit (10), die mit dem Behälter (6) verbunden ist und mit dem Klimaanlagensystem (2) des Fahrzeugs (3) auf eine derartige Weise verbindbar ist, dass es das Kühlmittelfluid auf Befehl aus dem/in das Klimaanlagensystem (2) des Fahrzeugs (3) ansaugt/zuführt; wobei die Station (1) zum Laden/Rückgewinnen eines Kühlmittels **dadurch gekennzeichnet ist, dass** sie elektronische Mittel (11) umfasst, die konfiguriert sind, um:
- die Neigung (INC(α₁,α₂)) der Station (1) zum Laden/Rückgewinnen eines Kühlmittels in Bezug auf eine vorab festgelegte horizontale Bezugsebene (P1) zu messen;
- die gemessene Neigung (INC(α₁,α₂)) mit einem vorab festgelegten minimalen Neigungsschwellwert zu vergleichen;
- die Kühlmittelansaug-/Zuführungseinheit (10) auf der Grundlage des Ergebnisses des Vergleichs zu stoppen oder in die Lage zu versetzen, das Kühlmittel in das Klimaanlagensystem (2) des Fahrzeugs (3) einzuspritzen.

2. Station zum Laden/Rückgewinnen eines Kühlmittels nach Anspruch 1, wobei die elektronischen Mittel (11) wenigstens einen elektronischen Neigungsmesser (13) umfassen, der konfiguriert ist, um die Längsneigung (α₁) und/oder die Querneigung (α₂) der Station (1) zum Laden/Rückgewinnen eines Kühlmittels in Bezug auf die vorab festgelegte Bezugsebene (P1) zu messen.

3. Station zum Laden/Rückgewinnen eines Kühlmittels nach Anspruch 1 oder Anspruch 2, wobei die elektronischen Mittel (11) wenigstens einen Beschleunigungsmesser (13) umfassen, der konfiguriert ist, um die Längsneigung (α₁) und/oder die Querneigung (α₂) der Station (1) zum Laden/Rückgewinnen eines Kühlmittels in Bezug auf die vorab festgelegte Bezugsebene (P1) zu messen.

4. Station zum Laden/Rückgewinnen eines Kühlmittels nach einem der vorangehenden Ansprüche, die umfasst:
- wenigstens eine elektronische flache Waagschale (8), die eine Messfläche (9) umfasst, auf welcher der Behälter (6) ruhend eingerichtet ist; wobei die elektronische flache Waagschalte (8), das gemessene Gewicht (PM), das zu dem Gewicht des in dem Behälter (6) enthaltenen Kühlmittels gehört, liefert;
wobei die elektronischen Mittel (11) Steuermittel (12) umfassen, die am Eingang das Messgewicht (PM) von der elektronischen flachen Waagschale (8) und die gemessene Neigung (INC(α₁,α₂)) empfangen und konfiguriert sind, um das Messgewicht (PM) auf der Grundlage der gemessenen Neigung (INC(α₁, α₂)) zu korrigieren, um ein korrigiertes Gewicht (PC) des Kühlmittels, das in das Klimaanlagensystem (2) geladen werden soll, zu bestimmen.

5. Station nach Anspruch 4, wobei die Steuermittel (12) konfiguriert sind, um die Kühlmittelansaug-/Zuführungseinheit (10) während des Ladebetriebs auf eine derartige Weise zu steuern, dass eine Menge des Kühlmittelfluids mit einem Gewicht, das dem korrigierten Gewicht (PC) entspricht, in das Klimaanlagensystem (2) eingespritzt wird.

6. Station nach Anspruch 4 oder Anspruch 5, wobei die elektronischen Mittel (11) konfiguriert sind, um eine Bedingung für die Annehmbarkeit der Messung des Gewichts des Kühlmittels, wenn die gemessene Neigung (INC(α₁, α₂)) kleiner oder gleich dem vorab festgelegten minimalen Neigungsschwellwert ist, oder ansonsten eine Bedingung für die Nichtannehmbarkeit der Messung des Gewichts des Kühlmittels, die den Ladebetrieb unterbindet, wenn die gemessene Neigung über dem vorab festgelegten minimalen Neigungsschwellwert ist, zu bestimmen.

7. Station nach Anspruch 6, wobei die elektronischen Mittel (11) konfiguriert sind, um ein Alarmsignal (AL) zu erzeugen, um dem Bediener durch eine Steuerschnittstelle (5) eine visuelle oder akustische Nachricht, die den Beschränkungsgrad des Ladebetriebs anzeigt, zu signalisieren/mitzuteilen, wenn die Bedingung für die Nichtannehmbarkeit der Wiegung erfüllt ist.

8. Betriebsverfahren für eine Station (1) zum Füllen bzw. Laden/Rückgewinnen eines Kühlmittels, die mit einem Klimaanlagensystem (2) eines Fahrzeugs (3) verbindbar ist, um ein Kühlmittelfluid in das/aus dem Klimaanlagensystem (2) zu laden/rückzugewinnen;
wobei die Station (1) zum Laden/Rückgewinnen eines Kühlmittels umfasst: wenigstens einen Behälter (6), der das Kühlmittel enthält, und eine Kühlmittelansaug-/Zuführungseinheit (10), die mit dem wenigstens einen Behälter (6) verbunden ist und mit dem Klimaanlagensystem (2) verbindbar ist, dass es ein Kühlmittel aus dem/in das Klimaanlagensystem (2) ansaugt/zuführt;
wobei das Verfahren die folgenden Schritte umfasst:
- Messen der Neigung (INC(α₁, α₂)) der Station (1) zum Laden/Rückgewinnen eines Kühlmittels in Bezug auf eine vorab festgelegte horizontale Bezugsebene (P1) durch elektronische Mittel (11);
- Vergleichen der gemessenen Neigung (INC(α₁, α₂)) mit einem vorab festgelegten minimalen Neigungsschwellwert; und
- auf der Grundlage des Ergebnisses des Vergleichs Unterbinden oder Ermöglichen, dass die Kühlmittelansaug-/Zuführungseinheit (10) das Kühlmittel in das Klimaanlagensystem (2) des Fahrzeugs (3) einspritzt.

9. Verfahren nach Anspruch 8, das den Schritt des Messens der Längsneigung (α₁) und/oder der Querneigung (α₂) der Station (1) zum Laden/Rückgewinnen eines Kühlmittels mittels eines elektronischen Neigungsmessers (13) umfasst.

10. Verfahren nach Anspruch 8, das den Schritt des Messens der Längsneigung (α₁) und/oder der Querneigung (α₂) der Station (1) zum Laden/Rückgewinnen eines Kühlmittels mittels eines elektronischen Beschleunigungsmessers (13) umfasst.

11. Verfahren nach einem der Ansprüche 8 bis 10, wobei die Station (1) zum Laden/Rückgewinnen eines Kühlmittels umfasst: wenigstens eine elektronische flache Waagschale (8), die mit einer Messfläche (9) versehen ist, auf welcher der Behälter (6) ruhend eingerichtet ist und die konfiguriert ist, um das gemessene Gewicht (PM), das zu dem Gewicht des in dem Behälter (6) enthaltenen Kühlmittels gehört, zu liefern;
wobei das Verfahren den Schritt zum Korrigieren des Messgewichts (PM) auf der Grundlage der gemessenen Neigung (INC(α₁, α₂)) umfasst, um ein korrigiertes Gewicht (PC) des Kühlmittels, das in das Klimaanlagensystem (2) geladen werden soll, zu bestimmen.

12. Verfahren nach Anspruch 11, das den Schritt zum Steuern der Kühlmittelansaug-/Zuführungseinheit (10) während des Ladebetriebs auf eine derartige Weise umfasst, dass eine Menge des Kühlmittels mit einem Gewicht, das dem korrigierten Gewicht (PC) entspricht, in das Klimaanlagensystem (2) eingespritzt wird.

13. Verfahren nach Anspruch 11 oder Anspruch 12, das den Schritt zur Bestimmung einer Bedingung für die Annehmbarkeit der Messung des Gewichts des Kühlmittels, wenn die gemessene Neigung (INC(α₁, α₂)) kleiner oder gleich dem vorab festgelegten minimalen Neigungsschwellwert ist; oder ansonsten einer Bedingung für die Nichtannehmbarkeit der Messung des Gewichts des Kühlmittels, die den Ladebetrieb unterbindet, wenn die gemessene Neigung über dem vorab festgelegten minimalen Neigungsschwellwert ist, umfasst.

14. Verfahren nach Anspruch 13, das den Schritt des Erzeugens eines Alarmsignals (AL) umfasst, um dem Bediener durch eine Steuerschnittstelle (5) eine visuelle oder akustische Nachricht, die den Beschränkungsgrad des Ladebetriebs anzeigt, zu signalisieren/mitzuteilen, wenn die Bedingung für die Nichtannehmbarkeit der Wiegung erfüllt ist.

15. Verwendung eines elektronischen Neigungsmessers (13) in einer Station (1) zum Laden/Rückgewinnen eines Kühlmittels nach einem der Ansprüche 1 bis 7, das konfiguriert ist, um mit einem Klimaanlagensystem (2) eines Fahrzeugs (3) verbunden zu werden, um die Ausführung des Betriebs zum Zuführen des Kühlmittels (10) in das Klimaanlagensystem (2) des Fahrzeugs (3) durch die Station (1) zum Laden/Rückgewinnen eines Kühlmittels auf der Grundlage eines Vergleichs zwischen der von dem elektronischen Neigungsmesser (13) gemessenen Neigung und einem vorab festgelegten minimalen Neigungsschwellwert zu stoppen.

## Revendications

1. Station de chargement/récupération d'un réfrigérant (1) adaptée pour pouvoir être connectée à un système de climatisation (2) d'un véhicule (3) afin de charger/récupérer un fluide réfrigérant dans ledit/dudit système de climatisation (2) du véhicule (3),
la station de chargement/récupération (1) comprenant :
- au moins un réservoir de réfrigérant (6) contenant le fluide réfrigérant,
- une unité d'aspiration/d'approvisionnement de réfrigérant (10) qui est connecté au réservoir (6) et qui peut être connecté au système de climatisation (2) du véhicule (3) d'une manière à aspirer/approvisionner sur commande le fluide réfrigérant du/dans le système de climatisation (2) du véhicule (3),
la station de chargement/récupération (1) étant **caractérisé en ce qu'**elle comprend des moyens électriques (11) configurés pour
- mesurer l'inclinaison (INC (α₁, α₂) ) de la station de chargement/récupération (1) par rapport à un plan de référence horizontal préétabli (P1),
- comparer l'inclinaison (INC (α₁, α₂) ) à un seuil préétabli d'inclinaison minimale,
- arrêter ou déclencher l'unité d'aspiration/d'approvisionnement (10) pour injecter le réfrigérant dans le système de climatisation (2) du véhicule (3) sur la base du résultat de la comparaison.

2. Station de chargement/récupération d'un réfrigérant selon la revendication 1, **caractérisé en ce que** les moyens électriques (11) comprennent au moins un inclinomètre électronique (13) adapté pour mesurer l'inclinaison longitudinale (α₁) et/ou l'inclinaison transversale (α₂) de la station de chargement/récupération (1) par rapport au plan de référence horizontal préétabli (P1).

3. Station de chargement/récupération d'un réfrigérant selon la revendication 1 ou la revendication 2, **caractérisé en ce que** les moyens électriques (11) comprennent au moins un accéléromètre (13) adapté pour mesurer l'inclinaison longitudinale (α₁) et/ou l'inclinaison transversale (α₂) de la station de chargement/récupération (1) par rapport au plan de référence horizontal préétabli (P1).

4. Station de chargement/récupération d'un réfrigérant selon l'une quelconque des revendications précédentes, comprenant :
- au moins une balance électronique (8) comportant une surface de mesure (9) sur laquelle reste ledit réservoir (6), la balance électronique (8) fournissant le poids mesuré (PM) associé au poids du réfrigérant contenu dans le réservoir (6),
les moyens électroniques (11) comprenant des moyens de commande (12) qui reçoivent et entrent le poids mesuré (PM) venant de la balance électronique (8) et l'inclinaison mesurée (INC (α₁, α₂) ) et sont adaptés pour corriger le poids mesuré (PM) sur la base de l'inclinaison mesurée (INC (α₁, α₂)) afin de déterminer un poids corrigé (PC) du réfrigérant à charger dans le système de climatisation (2).

5. Station de chargement/récupération d'un réfrigérant selon la revendication 4, **caractérisé en ce que** les moyens de commande (12) sont configurés pour commander l'unité d'aspiration/d'approvisionnement d'un réfrigérant (10) pendant l'opération de chargement d'une manière à injecter dans le système de climatisation (2) une quantité de fluide réfrigérant ayant un poids correspondant au poids corrigé (PC).

6. Station de chargement/récupération d'un réfrigérant selon la revendication 4 ou la revendication 5, **caractérisé en ce que** les moyens électroniques (11) sont configurés pour déterminer une condition d'acceptabilité de la mesure du poids du réfrigérant lorsque l'inclinaison mesurée INC((α₁,α₂)) est inférieure ou égale au seuil préétabli d'inclinaison minimale, ou une condition de non acceptabilité de la mesure du poids du réfrigérant qui empêche l'opération de chargement lorsque l'inclinaison mesurée est supérieure au seuil préétabli d'inclinaison minimale.

7. Station de chargement/récupération d'un réfrigérant selon la revendication 6, **caractérisé en ce que** les moyens électroniques (11) sont configurés pour engendrer un signal d'alarme (AL) afin de signaler/communiquer à l'opérateur, par une interface de commande (5), un message visuel ou acoustique indiquant la condition d'empêchement de l'opération de chargement lorsque la condition de non acceptabilité est remplie.

8. Procédé de fonctionnement d'une station de chargement/récupération d'un réfrigérant (1) pouvant être connectée à un système de climatisation (2) d'un véhicule (3) pour charger/récupérer un fluide réfrigérant dans/du système de climatisation (2),
la station de chargement/récupération d'un réfrigérant (1) comprenant au moins un réservoir de réfrigérant (6) contenant le fluide réfrigérant, et une unité d'aspiration/d'approvisionnement de réfrigérant (10) qui est connecté au réservoir (6) et qui peut être connecté au système de climatisation (2) d'une manière à aspirer/approvisionner sur commande le fluide réfrigérant du/dans le système de climatisation (2),
le procédé comprenant les étapes de :
- mesurer, à l'aide de moyens électroniques (11), l'inclinaison (INC (α₁, α₂)) de la station de chargement/récupération (1) par rapport à un plan de référence horizontal préétabli (P1),
- comparer l'inclinaison (INC (α₁, α₂)) à un seuil préétabli d'inclinaison minimale,
- arrêter ou déclencher l'unité d'aspiration/d'approvisionnement d'un réfrigérant (10) pour injecter le réfrigérant dans le système de climatisation (2) du véhicule (3) sur la base du résultat de la comparaison.

9. Procédé selon la revendication 8, comprenant l'étape de mesurer l'inclinaison longitudinale (α₁) et/ou l'inclinaison transversale (α₂) de la station de chargement/récupération (1) à l'aide d'un inclinomètre électronique (13).

10. Procédé selon la revendication 9, comprenant l'étape de mesurer l'inclinaison longitudinale (α₁) et/ou l'inclinaison transversale (α₂) de la station de chargement/récupération (1) à l'aide d'au moins un accéléromètre (13).

11. Procédé selon l'une quelconque des revendications 8 à 10, **caractérisé en ce que** la station de chargement/récupération d'un réfrigérant (1) comprend au moins une balance électronique (8) comportant une surface de mesure (9) sur laquelle reste ledit réservoir (6), la balance électronique (8) fournissant le poids mesuré (PM) associé au poids du réfrigérant contenu dans le réservoir (6),
le procédé comprenant l'étape de corriger le poids mesuré (PM) sur la base de l'inclinaison mesurée (INC (α₁, α₂)) afin de déterminer un poids corrigé (PC) du réfrigérant à charger dans le système de climatisation (2).

12. Procédé selon la revendication 11, comprenant l'étape de commander ladite d'aspiration/d'approvisionnement de réfrigérant (10) d'une manière à injecter dans le système de climatisation (2) une quantité de fluide réfrigérant ayant un poids correspondant au poids corrigé (PC).

13. Procédé selon la revendication 11 ou la revendication 12, comprenant l'étape de déterminer une condition d'acceptabilité de la mesure du poids du réfrigérant lorsque l'inclinaison mesurée INC( (α₁,α₂)) est inférieure ou égale au seuil préétabli d'inclinaison minimale, ou une condition de non acceptabilité de la mesure du poids du réfrigérant qui empêche l'opération de chargement lorsque l'inclinaison mesurée est supérieure au seuil préétabli d'inclinaison minimale.

14. Procédé selon la revendication 13, comprenant l'étape d'engendrer un signal d'alarme (AL) afin de signaler/communiquer à l'opérateur, par une interface de commande (5), un message visuel ou acoustique indiquant la condition d'empêchement de l'opération de chargement lorsque la condition de non acceptabilité est remplie.

15. Utilisation d'un inclinomètre électronique (13) dans une station de chargement/récupération d'un réfrigérant (1) selon l'une quelconque des revendications 1 à 7 configurée pour être connectée à un système de climatisation (2) d'un véhicule (3), pour arrêter la station de chargement/récupération d'un réfrigérant (1) dans l'exécution de l'opération d'approvisionnement du réfrigérant (10) au système de climatisation (2) du véhicule (3) sur la base d'une comparaison entre l'inclinaison mesurée par l'inclinomètre électronique (13) et un seuil préétabli d'inclinaison minimale.
